# FASCICULE DE BREVET EUROPEEN

(11) **EP 1 466 379 B1**
(45) Date de publication et mention de la délivrance du brevet: **08.01.2020**
(21) Numéro de dépôt: 03700260.7
(22) Date de dépôt: 15.01.2003
(51) Int. Cl.: H01G 9/022, H01G 11/56, H01M 10/0525, C08F 283/00, C09D 133/12, C08G 65/26, C08G 65/333, C08L 33/12, C08L 71/02, H01M 10/0565, C08F 290/06, H01M 4/587, H01M 4/525, H01M 4/505

(54) **ELECTROLYTE POLYMERE A HAUTE STABILITE, SON UTILISATION DANS LES SYSTEMES ELECTROCHIMIQUES**
HOCHSTABILITÄTSPOLYMERELEKTROLYT, DESSEN VERWENDUNG IN ELEKTROCHEMISCHEN SYSTEMEN
HIGHLY-STABLE POLYMERIC ELECTROLYTE AND USE THEREOF IN ELECTROCHEMICAL SYSTEMS

(30) Priorité: 16.01.2002 CA 2367290
(43) Date de publication de la demande: 13.10.2004
(73) Titulaire: HYDRO-QUEBEC, Montréal, Québec H2Z 1A4 (CA)
(72) Inventeur: ZAGHIB, Karim, Longueuil, Québec J4M 2M7 (CA); PERRIER, Michel, Montréal, Québec H1T 1H8 (CA); GUERFI, Abdelbast, Brossard, Québec J4X 1W2 (CA); DUPUIS, lisabeth, McMasterville, Québec J3G 1E6 (CA); CHAREST, Patrick, Ste-Julie, Québec J3E 1P2 (CA); ALLAIRE, François, Cap-de-la-Madeleine, Québec G8V 1R9 (CA); ARMAND, Michel, Montreal, Québec H3T 1N2 (CA)
(74) Mandataire: Goulard, Sophie
(86) Numéro de dépôt international: PCT/CA2003/000052
(87) Numéro de publication internationale: WO 2003/063287

(56) Documents cités:
- EP-A- 0 880 189
- EP-A2- 0 923 147
- JP-A- H0 864 028
- US-A- 5 436 090
- US-B1- 6 190 804
- US-B1- 6 280 882
- PATENT ABSTRACTS OF JAPAN vol. 015, no. 425 (C-0879), 29 octobre 1991 (1991-10-29) -& JP 03 177409 A (NIPPON OIL CO LTD), 1 août 1991 (1991-08-01)

## Description

### DOMAINE DE L'INVENTION

La présente est relative à des électrolytes et à des compositions électrolytiques à haute performance , notamment à haute stabilité, et aux systèmes électrochimiques utilisant ces électrolytes et/ou ces compositions électrochimiques.

### ÉTAT DE L'ART

La commercialisation de la batterie lithium-ion par Sony décrite par T. Nagura dans 3rd Rechargeable Battery Seminar, Deerfield Beach, F1 (1990) a permis une expansion et une percée importante des batteries dans le domaine des appareils électroniques portables tels que les téléphones et ordinateurs. La technologie des batteries Li-ion est basée sur des électrodes à intercalation de lithium; l'anode est constituée de graphite et la cathode est constituée d'oxyde des métaux (LiCoO₂, LiMnO₄, LiNiO₂). Lors de la première charge, un film de passivation se forme à la surface du carbone. La chimie et la composition de ce film de passivation sont complexes. Le protocole électrochimique de la formation de ce film reste un secret industriel. De 1990 à 1999, la chimie de la batterie Li-ion était essentiellement basée sur l'utilisation d'électrolytes à l'état liquide. L'extrapolation de la même chimie à de grands volumes pour les applications dans le domaine des voitures électriques reste problématique à cause de la réactivité de l'électrolyte liquide qui met en jeu la sécurité de la batterie à grande échelle.

A partir de 1999, la technologie dite «Li-ion polymère » a été commercialisée en particulier par des firmes japonaises. Cette technologie utilise des polymères gélifiés (« gels ») comme électrolyte, la proportion de polymère variant de 5 à 10 % en poids dans l'électrolyte. L'anode est de type graphite, la cathode est de type LiCoO₂. Le voltage moyen de cette technologie est de 3.6 Volts. L'un des avantages de cette technologie réside dans la simplification, en particulier pour les générateurs de forme prismatique, de plus en plus demandés, l'absence de liquide libre permet l'utilisation d'emballages de type « laminé métal plastique » flexibles et étanches, ce qui s'accompagne d'une augmentation de l'énergie spécifique massique et volumétrique. La puissance électrochimique obtenue par mise en œuvre de cette technologie est cependant limitée à des vitesses de décharge < 2C (charge-décharge en 30 minutes).

L'utilisation des polyéthers comme électrolyte dans des générateurs a été décrite par la société DKS dans le brevet US-A-5.356.553, par la société Yuasa Inc. dans le brevet US-A-5.436.090 et par la société Hydro-Québec dans le brevet US-A-6.280.882. Les polyéthers mentionnés dans ces documents sont stables à un voltage < 3.9 Volts et compatibles avec les technologies à électrolyte polymère telle que celles développées par la société Hydro-Québec qui utilise des cathodes de type oxydes de vanadium entre 2,2 et 3,4 Volts, ou récemment de type LiFePO₄ et qui opèrent à un voltage constant de 3 .5 Volts. En revanche, ce type de polyéther s'est avéré instable avec des cathodes de type 4 ou 5 Volts qui utilisent des cathodes à base de LiMn₂O₄ ou LiCoPO₄.

Ces technologies permettent d'avoir de l'énergie et de la puissance allant jusqu'à un régime de 12 C (charge-décharge en 5 minutes). Cette technologie opère à des voltages supérieurs à 4 Volts versus Li+/Li. Pour augmenter la sécurité des générateurs utilisant cette technologie et pour augmenter davantage la densité d'énergie disponible, il faut utiliser un électrolyte polymère gel stable à des voltages > 4 Volts.

Le brevet US 6,190,804 divulgue un électrolyte solide pour batteries obtenu par dissolution d'un composé macromoléculaire tétra-fonctionnel et d'un sel électrolytique dans un solvant, suivie d'une réticulation de la solution par irradiation actinique et/ou par chauffage. Le document FR 2 724 261 divulgue une composition d'électrolyte polymère pour générateurs électrochimiques au lithium du type ACEP (accumulateur à électrolyte polymère), comprenant un mélange de polymère dans lequel l'une des composantes est un polymère de masse moléculaire élevé et l'autre composante est un polymère de faible masse moléculaire résultant en une réticulation plus efficace et plus rapide par irradiation.

Par ailleurs, on sait que les polymères de type étoile permettent, y compris dans le cas des polyéthers, de diminuer la tendance à la cristallinité significative d'instabilité. Des polymères de type étoile à 3 branches dérivés du glycérol ou du triméthylol-propane ont été utilisés pour la constitution d'électrolyte polymères, réticulables par des terminaisons acrylates ou méthacrylates. Le brevet EP0923147 décrit un électrolyte polymère pour un générateur électrochimique comprenant un polymère en étoile de type polyéther à quatre branches.Le brevet JPH0864028 décrit un électrolyte à base d'un mélange de polyéther et d'un composé inorganique tel que la silice.

Il existait donc un besoin pour des électrolytes et pour des compositions électrolytiques dépourvues de certains des inconvénients des électrolytes de l'art antérieur et présentant une très bonne stabilité au cyclage.

### RÉSUMÉ DE L'INVENTION

La présente invention est relative à un électrolyte polymère à base d'au moins un polymère à quatre branches présentant une stabilité électrochimique importante. Cet électrolyte polymère aussi appelé HVSP (High Voltage Stable Polymer) est avantageusement utilisable dans les systèmes électrochimiques.

La présente invention est également relative à des compositions électrolytiques obtenues par réticulation des électrolyte polymères de l'invention.

Un autre objet de la présente invention est relatif à des procédés permettant la préparation d'un polymère sec ou plastifiant et à son utilisation notamment dans le domaine des supercondensateurs hybrides et générateurs électrochimiques.

Enfin la présente invention est relative aux dispositifs électrochimiques, notamment aux supercondensateurs comportant au moins un électrolyte et/ou au moins une composition électrolytique selon l'invention.

### BRÈVE DESCRIPTION DES FIGURES

- **La Figure 1** :: illustre le domaine de stabilité électrochimique de différentes anodes et cathodes, le potentiel moyen de chaque électrode est représenté en fonction de la stabilité du polymère (HVSP) de cette invention comparativement à un polyéther classique (POC).
- **La Figure 2 :**: illustre un procédé électrochimique selon l'invention pour détecter le courant d'oxydation et montre la limite du voltage de fonctionnement du polymère.
- **La Figure 3 :**: illustre les différentes applications du « High Voltage Stable Polymer » (HVSP) comme électrolyte avec différentes anodes et cathodes pour des batteries et pour des supercondensateurs.
- **La Figure 4 :**: illustre le dispositif expérimental utilisé pour réaliser la polymérisation in-situ par infrarouge.
- **La Figure 5 :**: illustre les résultats des tests de stabilité en oxydation de différents polymères sans et avec addition de différents types de TiO₂.
- **La Figure 6 :**: illustre les résultats des tests de stabilité du polymère sans et avec addition de SiO₂.
- **La Figure 7 :**: illustre les résultats des tests de stabilité sans et avec addition de PVDF ou avec addition de PMMA.

La présente invention est également relative à des procédés permettant la préparation d'un polymère sec ou plastifiant et à son utilisation notamment dans le domaine des supercondensateurs hybrides et des générateurs électrochimiques.

### DESCRIPTION GÉNÉRALE DE L'INVENTION

Dans le cadre de la présente invention, l'expression dispositif électrochimique couvre notamment les batteries, les supercondensateurs et les supercondensateurs hybrides.

Une batterie est un dispositif électrochimique comportant au moins une anode et une cathode faite d'un matériau à insertion ou d'un polymère conducteur.

Un supercondensateur comporte au moins deux électrodes à double couche sans insertion et ne faisant pas appel à une réaction d'insertion.

Un supercondensateur hybride comporte au moins une électrode à insertion et au moins une électrode à double couche.

Une batterie ou un supercondensateur est généralement représentée comme suit :

Anode/Electrolyte/Cathode : (I)

Un premier objet de la présente invention est constitué par la famille des électrolytes polymères pour un générateur électrochimique à base :
- d'au moins un polymère à quatre branches ayant de préférence des terminaisons hybrides, plus préférentiellement encore des terminaisons hybrides acrylates (de préférence méthacrylate) et alkoxy (de préférence alkoxy avec de 1 à 8 atomes de carbone, plus préférentiellement encore méthoxy ou éthoxy), ou encore vinyl, une branche au moins dudit polymère à quatre branches (et de préférence au moins deux branches) étant susceptible(s) de donner lieu à une réticulation ;
- d'au moins un composant choisi dans les familles suivantes :
   - des poly(vinylyldiènefluoride), aussi appelés (PVDF), de formule chimique (CH₂-CF₂)ₙ, avec n variant de préférence entre 1.000 et 4.000, de préférence tels que n est voisin de 150, préférentiellement ceux ayant un poids moléculaire moyen compris entre 10.000 et 1 million, plus préférentiellement encore ceux ayant un poids moléculaire moyen compris entre 100.000 et 250.000;

   - des copolymères poly(vinylydiène fluoro-co-hexafluoropropène), de formule [(CH₂-CF₂)ₓ(CF₂-CF(CF₃))₁₋ₓ]ₙ aussi appelés (PVDF-HFP), avec n variant de 1.000 à 4.000, de préférence n varie de 2.000 à 3.000, plus préférentiellement encore n est voisin de 150 et x varie de préférence entre 0,12 et 0,5, préférentiellement ceux ayant un poids moléculaire moyen compris entre 10.000 et 1 million, plus préférentiellement encore ceux ayant un poids moléculaire moyen compris entre 100.000 et 250.000;
   - des poly(tetrafluoroethylène), aussi appelés (PTFE), de formule chimique (CF₂-CF₂)ₙ, avec n variant de 5 à 20.000, de préférence n variant de 50 à 10.000, préférentiellement ceux ayant un poids moléculaire moyen compris entre 500 et 5 millions, plus préférentiellement encore ceux ayant un poids moléculaire moyen compris entre 5.000 et 1.000.000, de préférence d'environ 200.000;
   - des poly(éthylène-co-propylène-co-5-methylène-2-norbornène) ou des copolymères éthylène propylène-diène, aussi appelés EPDM, préférentiellement ceux ayant un poids moléculaire moyen compris entre 10.000 et 250.000, de préférence compris entre 20.000 et 100.000;
   - des polyols, de préférence des polyols tels que :
      - l'alcool polyvinylique avec un poids moléculaire moyen qui est de préférence compris entre 50.000 et 1 million, ou une cellulose, de préférence d'un poids moléculaire moyen compris entre 5.000 et 250.000 dont une partie des groupements OH est remplacée par des groupements OCH₃, OC₂H₅, OCH₄OH, OCH₂CH(CH₃)OH, OC(=O)CH₃, ou OC(=O)C₂H₅, et/ou
      - les produits de condensation de l'oxyde d'éthylène, de préférence ceux ayant un poids moléculaire moyen compris entre 1.000 et 5.000, de préférence pur ou en mélange avec de l'oxyde de propylène sur du glycérol ou du triméthylolpropane, et éventuellement réticulés par un di ou tri-isocyanate de formule (O=C=N)ₓ-R avec 2<x<4 et R représentant un groupement aryl ou alkyl assurant la polyfonctionnalité avec le groupe (O=C=N)ₓ;
   - des poly(méthylmétacrylate) aussi appelés (PMMA), de formule [(CH₂-C(CH₃)/(CO₂CH₃)]ₙ, avec n variant de préférence entre 100 et 10.000, plus préférentiellement encore n variant de 500 à 5.000, préférentiellement ceux ayant un poids moléculaire moyen compris entre 10.000 et 1 million, de préférence ceux ayant un poids moléculaire moyen compris entre 50.000 et 500.000;
   - des poly(acrylonitrile), aussi appelés (PAN), de formule chimique [CH₂-CH(CN)]ₙ avec n variant de 150 à 18.800, plus préférentiellement encore n variant de 300 à 4.000, préférentiellement ceux ayant un poids moléculaire moyen compris entre 10.000 et 1 million, plus préférentiellement encore ceux ayant un poids moléculaire moyen compris entre 20.000 et 200.000;
   - SiO₂-Al₂O₃; et
   - nano TiO₂ enrobé ou non d'une matière organique qui est de préférence compatible (c'est à dire stable et/ou ne générant aucune réaction secondaire parasite), avec un ou plusieurs des polymères définis dans les colonnes 1 et 2 du brevet US-A-6.190.804), la matière inorganique étant préférentiellement choisie dans le groupe constitué par au moins un polyol et/ou par un copolymère polyéthyle-polyoxyde d'éthylène et/ou d'une matière inorganique qui est de préférence SiO₂ et/ou Al₂O₃.

De préférence le polymère à quatre branches est un de ceux définis dans les colonnes 1 et 2 du brevet américain US-A-6.190.804. Ce document est incorporé par référence à la présente demande.

Ce polymère est préférentiellement un polymère en étoile de type polyéther qui possède au moins quatre branches ayant des terminaisons contenant les fonctions suivantes : acrylate ou méthacrylate et alkoxy, allyloxy et/ou vinyloxy, dont au moins une, et de préférence dont au moins deux de ces fonctions sont actives pour permettre une réticulation. Le voltage de stabilité d'une composition électrolytique selon l'invention qui contient ce polymère est nettement supérieur à 4 Volts.

Selon un mode préférentiel de réalisation de la présente invention, le polymère à 4 branches est un polymère tétrafonctionnel de préférence à haut point moléculaire répondant à la formule (I): 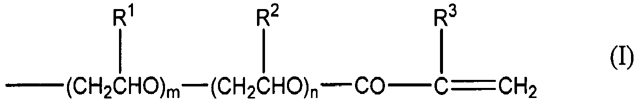 dans laquelle R¹ et R² représentent chacun un atome d'hydrogène ou un alkyl inférieur (de préférence de 1 à 7 atomes de carbones); R³ représente un atome d'hydrogène ou un groupe méthyl; m et n représentent chacun un entier supérieur ou égal à 0; dans chaque chaîne à haut point moléculaire, m+n ≧35; et chacun des groupes R¹, R², R³ et chacun des paramètres m et n peuvent identiques ou différents dans les 4 chaînes à haut point moléculaire.

Selon un autre mode préférentiel de réalisation de la présente invention le High Voltage Stable Polymer (HVSP) est constitué d'un polyéther de type étoile d'au moins quatre branches avec une terminaison hybride (acrylate ou méthacrylate et alkoxy, allyloxy, vinyloxy). Son voltage de stabilité est nettement supérieur à 4 Volts.

Selon un mode préférentiel de réalisation de l'invention, l'électrolyte polymère comporte en outre un sel, de préférence un sel de lithium, tel que LiTFSI, ou un mélange de sels avec un plastifiant constitué de préférence par un solvant organique.

Selon un autre mode avantageux, l'électrolyte polymère en l'absence de solvant ou de plastifiant est sous forme sèche (free solvent), obtenue par addition d'un sel de lithium ou d'un mélange de sels dans la matrice polymère (assurant la conductivité ionique). Les sels de lithium préférés sont ceux de type: LiN(SO₂CF₃)₂ : LiTFSI, LiN(SO₂C₂F₅)₂ : BETI, LiC(SO₂CF₃)₃, LiBF₄, LiPF₆, LiClO₄, LiSO₃CF₃, LiAsF₆.

Selon un autre mode avantageux, les électrolytes polymères de l'invention contiennent un plastifiant constitué par au moins un mélange de solvant organique choisi de préférence dans le groupe constitué par: un carbonate d'éthylène, un carbonate de propylène, une γ-gamma butyrolactone, un carbonate de diméthyle, un carbonate de diéthyle, une tétra éthyl-sulfone amide, et un carbonate de méthyl-éthyl (EMC).

**Un deuxième objet** de la présente invention est constitué par les compositions électrolytiques obtenues à partir d'au moins un électrolyte polymère selon le premier objet de la présente demande, de préférence en soumettant les composants dudit électrolyte à des conditions permettant de réaliser leur réticulation.

Selon un mode avantageux de réalisation, la réticulation se fait par UV, par traitement thermique et/ou par faisceau d'électrons (EB).

Les compositions électrolytiques obtenues par réticulation en présence d'au moins un sel de lithium, présentent un intérêt particulier.

Celles obtenues par réticulation en l'absence de sels de lithium présentent également un intérêt. Ces compositions électrolytiques peuvent être préparées dans un réacteur mais également dans une batterie ou dans un supercondensateur hybride, une fois construit. Il suffit d'y introduire un électrolyte polymère de l'invention et de réaliser la réticulation *in situ.*

La réticulation est avantageusement réalisée:
- à une température comprise entre 50 et 100 °C, de préférence à une température comprise entre 60 et 80 °C; et/ou
- pendant une durée comprise entre 5 minutes et 8 heures, de préférence pendant une durée comprise entre 1 heure et 4 heures; et/ou
- en présence d'un catalyseur de réticulation choisi de préférence dans le groupe des Peroxides, des Hydroperoxides et des Peresters, de préférence le catalyseur est choisi dans le groupe constitué par les peroxides organiques tels que les peroxycarbonates (Benzoyl Peroxide ou Azo Compounds).

Selon un mode avantageux, la composition électrolytique se présente sous forme d'un gel, cette forme est obtenue de préférence par Docteur Blade ou par injection.

Selon un autre mode avantageux, la composition électrolytique est sous forme solide, cette forme est obtenue par Docteur Blade ou par extrusion.

**Un troisième objet** de la présente invention est constitué par un dispositif électrochimique tel qu'une batterie, un supercondensateur ou un supercondensateur hybride comprenant :
- au moins un électrolyte de l'invention et/ou au moins une composition électrolytique selon l'invention;
- une anode électroactive de préférence de type Li₄Ti₅O₁₂, et
- une cathode de type 3,5 à 5 Volts tel que celles constituées à partir de LiCoPO₄ et/ou de Li(Mn_{0.66}Ni_{0.34})O₂ ou autres.

Un autre supercondensateur avantageux selon l'invention comprend:
- au moins un électrolytique polymère et/ou au moins une composition électrolytique selon l'invention;
- une anode électroactive de préférence de type Li₄Ti₅O₁₂; et
- une cathode électroactive de préférence de type carbone de grande surface.

De préférence, le carbone est sous forme de particules ayant une surface spécifique supérieure ou égale à 2 m²/g et inférieure ou égale à 2.500 m²/g, de préférence sous forme de particules ayant une surface spécifique supérieure ou égale à 50 m²/g, de préférence comprise entre 50 et 2.400 m²/g.

Selon une variante avantageuse, la cathode électroactive est de type polymère conducteur et est de préférence constituée d'au moins un polymère conducteur à haut voltage tel qu'une polyaniline et/ou tel qu'un polythiophène et/ou tel qu'un arylthiophène, de préférence chois dans la famille des 3-arylthiophènes.

De préférence, l'anode électroactive est de type GIC (Graphite Intercalation Compound), de préférence composée de graphite naturel et/ou artificiel, et/ou de carbone à haute cristallinité, de préférence le carbone est traité thermiquement avant d'être utilisé pour constituer l'électrode, à des températures > 2.000° C (deux milles degrés Celsius).

Selon une variante particulièrement avantageuse, dans ces dispositifs électrochimiques, l'anode électroactive est constituée d'une couche de carbone de type à basse cristallinité, de préférence de type carbone traité à des températures inférieures ou égales à 2.000°Celsius et/ou d'un carbone dur (hard carbone).

Préférentiellement, les dispositifs électrochimiques ou supercapaciteurs selon la présente invention possèdent une anode électroactive de type alliage de lithium, tel que AlLi et/ou Li_{4,4}Sn₂₂ ou autres.

D'autres dispositifs électrochimiques ou supercondensateurs d'un intérêt particulier sont ceux dans lequel la cathode électroactive est de type 4 Volts et est préférentiellement constituée à partir d'au moins un oxyde choisi dans le groupe constitué par LiCoO₂, LiMn₂O₄ et/ou LiNiO₂ ou les composés mettant en jeu les couples rédox de ces éléments, seuls ou en mélange.

À titre d'exemple, un dispositif supercapacitif très performant est réalisé avec une anode électroactive de type lithium métallique.

La présente invention a donc pour objet tout dispositif électrochimique présentant une stabilité au cyclage, déterminée selon la méthode définie dans la description en page 15, qui est supérieure à 4 Volts.

### DESCRIPTION DE MODES PRÉFÉRENTIELS DE L'INVENTION

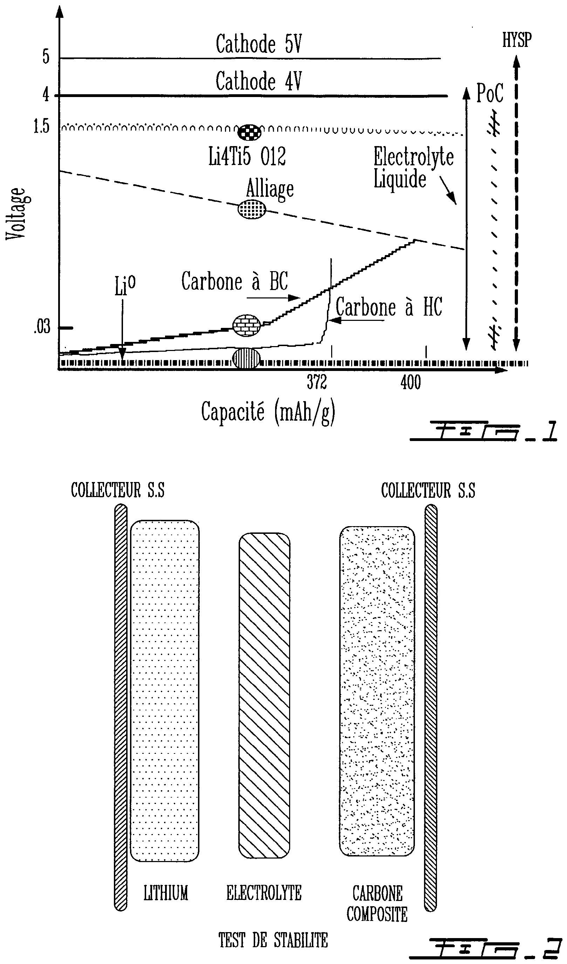

Un premier mode préférentiel de réalisation de la présente invention est illustré dans la Figure 1. Le fonctionnement des anodes et des cathodes y est représenté par leur voltage moyen respectif.

Une batterie ou un supercondensateur est généralement représentée comme suit :

Anode/Electrolyte/Cathode : (1)

Le fonctionnement de quatre types d'anode est représenté dans la Figure 1, à savoir des anodes:
- lithium métallique;
- carbone et graphite;
- alliage à base de lithium; et
- Li₄Ti₅O₂.

Le fonctionnement de deux types de cathode est représenté dans la Figure 1, à savoir les cathodes:
- 4 Volts (LiCoO₂, LiMn₂O₄, LiNiO₂); et
- 5 Volts (LiCoPO₄, carbone à grande surface : carbone double couche).

Dans le cadre de la présente invention, on appelle carbone à grande surface (spécifique) un carbone ayant une surface spécifique supérieure à 50 m²/grammes. Plus particulièrement dans le cas de la Figure 1, le carbone à grande surface possède une surface de 80 m²/grammes.

Pour être assuré de pouvoir utiliser les électrolytes de l'invention testés dans tous les types de dispositifs électrochimiques mentionnés dans la Figure 1, selon la relation (I) précédemment définie, il faut que le polymère soit stable en réduction et en oxydation. Le seul polymère qui réunit les propriétés mentionnées ci-dessus est l'électrolyte polymère, selon l'invention, aussi appelée HVSP (nom chimique). Ce polymère est à base de polyéther à structure étoile à au moins quatre branches avec une terminaison hybride (acrylate et alkoxy). Son voltage de stabilité est nettement supérieur à 4 Volts. Contre toute attente, il a été constaté que la structure du polymère ne change en rien la stabilité chimique ni donc la stabilité électrochimique du polymère. D'une manière surprenante et inexpliquée, il a été trouvé que les polymères en étoile à au moins quatre branches dans les électrolytes et compositions élrectrolytiques de l'invention possèdent un domaine de stabilité nettement supérieur à celui des polymères linéaires ou en étoile à trois branches précités (stables à < 3,9 Volts).

La compatibilité physico-chimique de HVSP avec les graphites permet de former un film de passivation stable à la surface des graphites et d'assurer une bonne cyclabilité à long terme avec les cathodes de 4 Volts et plus.

Le HVSP utilisé dans cette invention est fabriqué par DKS Japon et porte la référence commerciale ELEXCEL MP210-1. Ce polymère est, à température ambiante, sous forme d'un liquide visqueux transparent et possède les propriétés physico-chimiques suivantes :

| | |
|---|---|
| - humidité en ppm | 20> |
| - ion métallique alcalin (ppm, comme Na+) | 10> |
| - ion chlorure (ppm, comme Cl⁻) | 10> |
| - acide acrylique (ppm) | 10> |
| - poids moléculaire | 10100 |
| - apparence* | liquide transparent visqueux. |

| | |
|---|---|
| * à 25 ° C, la viscosité est typiquement d'environ 3.5 Pa.sec. | |

Ce polymère possède quatre branches avec une terminaison hybride (acrylate et alkoxy). La terminaison acrylate sert à la réticulation du polymère. La réticulation peut être réalisée par plusieurs méthodes, soit par irradiation UV, par faisceau d'électrons, aussi appelé (EB) pour « électron beam », ou par voie thermique en sélectionnant l'initiateur adéquat.

Il s'avère que la terminaison acrylate, méthacrylate, allyloxy ou vinyloxy sert à assurer la réticulation du polymère et que la ou les terminaisons alkoxy servent à assurer la stabilité du polymère en oxydation.

Pour détecter la limite du voltage de fonctionnement du polymère avec le courant d'oxydation, une nouvelle méthode électrochimique représentée dans la Figure 2 a été mise en œuvre. Selon ce mode de réalisation de la présente invention, la cathode est un composite de polymère et de carbone à grande surface épandu sur un collecteur de courant d'aluminium. Grâce à la surface développée par le carbone, ce matériau joue le rôle de détecteur et peut déceler n'importe quel courant d'oxydation avec une intensité aussi faible qu'environ 2 µA. L'électrolyte sous forme solide ou sous forme liquide, imbibée dans une membrane de type polyoléfine microporeuse, comme le Celgard®, est stable à haut voltage.

L'anode est composée de lithium métallique qui sert comme électrode de référence et comme contre-électrode.

La méthode électrochimique utilisée est la cyclovoltammétrie lente mise en œuvre avec une vitesse de balayage de 10 mV/h. Cette méthode illustre le courant d'oxydation en fonction du voltage : à chaque fois que le courant se rapproche de zéro, le voltage de fonctionnement du polymère est stable.

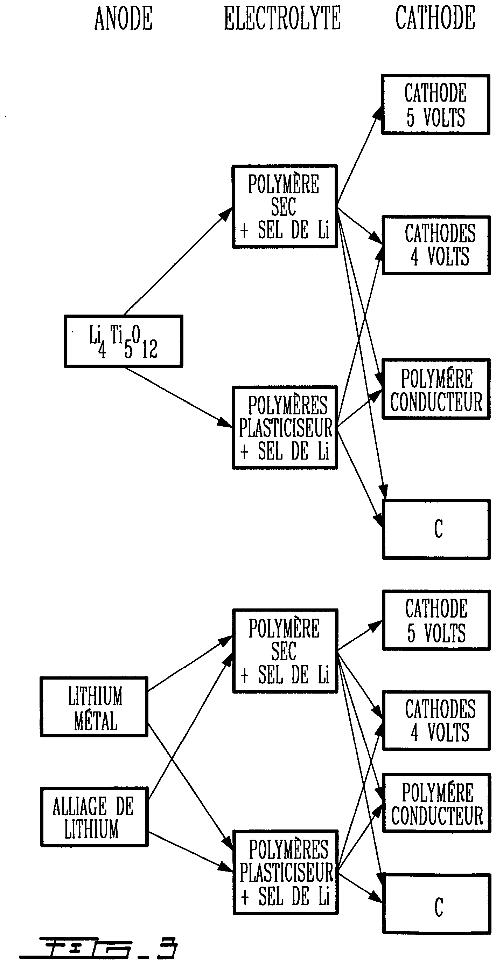

La Figure 3 illustre différents configurations technologiques susceptibles d'être avantageusement applicables aux électrolytes à base de polymère HVSP, à savoir:
- **Technologie (I)** - **Li₄Ti₅O₁₂/ HVSP/Carbone : supercondensateur hybride**

Dans cette configuration :
- Li₄Ti₅O₁₂ représente l'anode à insertion, HVSP est l'électrolyte et le séparateur, la cathode est à base de carbone (de préférence à base de graphite) de grande surface spécifique, c'est à dire d'une surface spécifique supérieure à 50 m²/grammes et de préférence comprise entre 500 et 2.500 m²/grammes; plus préférentiellement encore d'environ 2.400 m²/grammes (d'environ 1200 m²/grammes dans le cas du graphite ce qui représente la limite théorique des plans intérieurs du graphite) ; le mécanisme relié à cette cathode est celui de la double couche (CDL) ;
- l'électrolyte peut se présenter sous deux formes :
   - sèche et contenant de 40 à 85 %, de préférence environ 50 % en poids de matrice polymère, le complément étant un sel de lithium ou d'un mélange de sels pour assurer la conductivité ionique, les sels étant préférentiellement choisis dans le groupe constitué par: LiN(SO₂CF₃)₂ : LiTFSI, LiN(SO₂C₂F₅)₂ : BETI, LiC(SO₂CF₃)₃, LiBF₄, LiPF₆, LiClO₄, LiSO₃CF₃ et LiAsF₆;
   - gel et contenant de 5 à 75 % en poids de polymère ELEXCEL et 95 % à 25 % de plastifiant, le plastifiant étant un mélange de solvant organique tel que : EC (carbonate d'éthylène), PC (carbonate de propylène), γ-GBL(γ-butyrolactone), carbonate de diméthyle (DMC), carbonate de diéthyle (DEC), TESA (tétra éthyl-sulfone amide), éthyl méthyl carbonate (EMC), le sel ou le mélange de sel étant à une concentration variant de 0,75 à 2 Moles par rapport au plastifiant.

La mise en oeuvre de la technologie (I) permet de faire fonctionner des matériaux d'électrode au delà de 4 Volts. À noter également que l'utilisation de Li₄Ti₅O₁₂ ne demande aucune formation préalable du système électrochimique.

### Technologie (II) - Graphite/ HVSP/Carbone : supercondensateur hybride

Dans cette configuration, le graphite constitue l'anode à insertion, HVSP est l'électrolyte et le séparateur, la cathode est à base de carbone de grande surface, le mécanisme relié à cette cathode est de type double couche (CDL).

L'électrolyte se présente sous deux formes :
- sèche et contenant de 40 à 85 %, de préférence d'environ 50 % en poids de matière polymère, le complément est constitué d'un sel de lithium ou d'un mélange de sels pour assurer la conductivité ionique, les sels sont préférentiellement choisis dans le groupe constitué par LiN(SO₂CF₃)₂ : LiTFSI, LiN(SO₂C₂F₅)₂ : BETI, LiC(SO₂CF₃)₃, LiBF₄, LiPF₆, LiClO₄, LiSO₃CF₃ et LiAsF₆,
   - de gel et contenant de 5 à 75 % en poids de matière polymère et 95 à 25 % en poids de plastifiant liquide, le plastifiant est un mélange de solvant organique tel que : EC (carbonate d'éthylène), PC (carbonate de propylène), γ-GBL(gamma-butyrolactone), diméthyle carbonate (DMC), diéthyle carbonate (DEC), TESA (tétra éthyle sulfone amide), carbonate de méthyle éthyle (EMC), le sel ou le mélange de sels étant présent dans le solvant à une concentration variant de 0,75 à 2Moles par rapport au plastifiant.

Le mise en oeuvre de la technologie (II) permet d'atteindre une stabilité des matériaux > à 4,5 Volts. L'électrolyte polymère HVSP est stable en réduction et permet de former éventuellement un film de passivation à la surface du graphite. Il est stable en oxydation et peut assurer une bonne cyclabilité. Il faut réaliser une « formation électrochimique préalable » par une séquence cyclage approprié avant utilisation du générateur électrochimique.

### Technologie (III) - Li₄Ti₅O₁₂/ HVSP/Cathode 5Volts (LiCoPO₄) : Li-ion

L'anode et la cathode sont des matériaux à insertion, HVSP est l'électrolyte.

L'électrolyte se présente sous deux formes:
- sèche et contenant de 40 à 85 % en poids, de préférence contenant environ 50 % en poids de matrice polymère, le complément étant constitué d'un sel de sels de lithium ou d'un mélange de sels pour assurer la conductivité ionique, les sels étant préférentiellement choisis dans le groupe constitué par: LiN(SO₂CF₃)₂ : LiTFSI, LiN(SO₂C₂F₅)₂ : BETI, LiC(SO₂CF₃)₃, LiBF₄, LiPF₆, LiClO₄, LiSO₃CF₃ et LiAsF₆,
- de gel et contenant de 5% à 75 % en poids de gel et de matrice polymère et 95 à 25 % de plastifiant, le plastifiant étant un mélange de solvant organique tel que : EC (carbonate d'éthylène), PC (carbonate de propylène), γ-GBL(γ-butyrolactone), diméthyle carbonate (DMC), diéthyle carbonate (DEC), TESA (tétra éthyle sulfone amide), carbonate de méthyle éthyle (EMC), le sel ou le mélange de sels sont présents à une concentration variant de 0,75 à 2 Moles par rapport au plastifiant.

La mise en œuvre de la technologie (III) permet d'atteindre une stabilité des matériaux > 4,5 Volts. L'utilisation de Li₄Ti₅O₁₂ ne demande aucune formation préalable de la batterie.

### Technologie (IV) - Graphite/ HVSP/ Cathode 5 Volts (LiCoPO₄) : batteries Li-ion

Dans cette configuration l'anode (graphite) et la cathode sont des matériaux à une insertion, HVSP constitue l'électrolyte et le séparateur. Le mécanisme relié à cette anode est de type GIC (graphite Intercalation Compound).

L'électrolyte peut se présenter sous deux formes :
- sèche et contenant de 40 à 85 %, de préférence contenant environ 50 % en poids de matrice polymère, le complément étant constitué d'un sel de lithium ou d'un mélange de sels pour assurer la conductivité ionique, les sels sont choisis de préférence dans le groupe constitué par: LiN(SO₂CF₃)₂ : LiTFSI, LiN(SO₂C₂F₅)₂ : BETI, LiC(SO₂CF₃)₃, LiBF₄, LiPF₆, LiClO₄, LiSO₃CF₃ et LiAsF₆,
- de gel et contenant de 5 à 75 % en poids de gel et de matrice polymère et 95 à 25 % de plastifiant, le plastifiant est un mélange de solvant organique tel que : EC (carbonate d'éthylène), PC (carbonate de propylène), γ-GBL(γ-butyrolactone), diméthyle carbonate (DMC), diéthyle carbonate de (DEC), TESA (tétra éthyle sulfone amide), carbonate de méthyle éthyle (EMC), le sel ou le mélange de sels étant à une concentration variant de 0,75 à 2 Moles par rapport au plastifiant.

La mise en œuvre de la technologie (IV) permet d'atteindre une stabilité des matériaux > 4,5 Volts. Le polymère HVSP est stable en réduction et peut former un film de passivation à la surface du graphite. Il est stable en oxydation et peut assurer une bonne cyclabilité. Il faut réaliser une formation préalable au supercondensateur.

Les exemples qui suivent sont seulement donnés à titre illustratif et ne seraient être interprétés comme constituant une quelconque limitation de l'objet de l'invention.

### Exemple 1 - test de stabilité en oxydation du polymère gel

### ELEXCEL MP210- 1 : Électrolyte et liant

80 % en poids du polymère étoile ELEXCEL MP210-1 à quatre branches est mélangé avec 20 % en poids d'un PVDF (KUREHA, Japan, KF 1.300) d'un poids moléculaire moyen de 500.000 g/mole, pour former la matrice polymère.

Puis, 78% en poids de cette matrice polymère sont mélangés avec 22 % en poids de carbone de Shawinigan d'une taille de particules comprise entre 100 nm et 250 nm.

Ce mélange est épandu sur un collecteur en aluminium, puis chauffé pendant 12 heures sous balayage d'azote. Ensuite, le séchage est complété pendant 2 heures sous vide. L'électrode ainsi obtenue est montée face à une électrode de lithium métal séparé par un Celgard (de référence 2.300) imbibé dans un électrolyte EC+DMC-1M LiClO₄.

Le test électrochimique réalisé est une cyclovoltammétrie lente (10mV/h) entre 3 et 4,5 Volts. Dans ce domaine de voltage 3 et 5 volts, une stabilité en oxydation a été obtenue comparativement à un polyéther standard à trois branches dont le courant d'oxydation augmente d'une manière significative vers 3,9 Volts.

### Exemple 2 - test de stabilité en oxydation du polymère gel ELEXCEL

### MP210- 1 : Électrolyte

Un composite de carbone de Shawinigan (20 % en poids) est mélangé avec un liant de type PVDF (80% en poids). Une électrode préparée selon une méthode manuelle. Cette électrode est utilisée comme électrode de travail. Le lithium métallique est utilisé à la fois comme contre électrode et comme référence dans la cellule électrochimique.

L'électrolyte polymère est préparé par mélange du polymère ERM-1 ELEXCEL (4 branches) de DKS lot 8K1201 avec 1.5M LiBF₄ dans EC/GBL (1 :3) de Tomiyama, et par ajout d'un thermoinitiateur Perkadox 16 d'Akzo Nobel, dans les proportions: 0,102 grammes de Perkadox-16 (1000ppm) dans 100 grammes de la solution ERM1/(EC:GBL+ LiBF₄), sachant que le rapport massique ERM1/(EC:GBL+ LiBF₄) est de (90 :10).

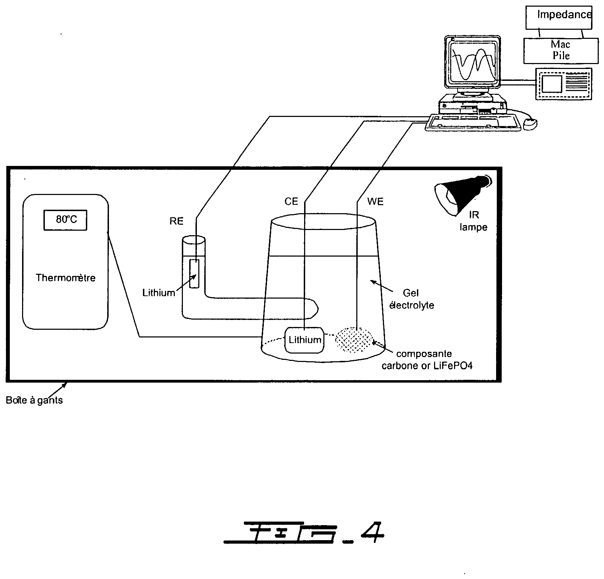

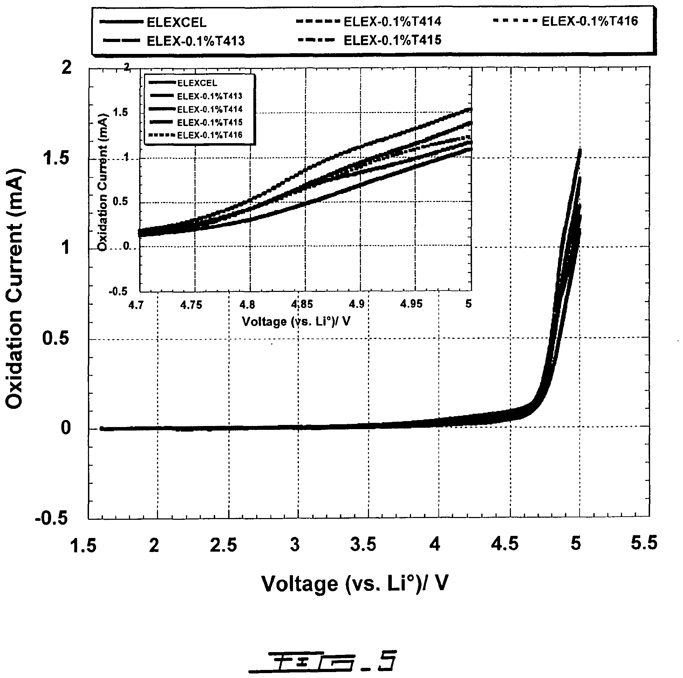

La Figure 4 montre le dispositif expérimental utilisé pour réaliser la polymérisation in-situ par infrarouge, à une température de 80°C. Après 1 heure de traitement, le gel est complètement formé, de couleur transparente. Les trois électrodes sont branchées à un cycleur de type MacPile®. Le test de stabilité électrochimique est réalisé comme dans l'exemple 1. La Figure 5 montre le mur d'oxydation du polymère gel: le voltage du mur de stabilité mesuré à une valeur de courant de 100µA est de 4.7 Volts.

### Exemple 3 - test de stabilité en oxydation du polymère gel ELEXCEL MP2101 1/TiO₂ (XP-416): Électrolyte

Le même composite que dans l'exemple 2 de carbone de Shawinigan est mélangé avec un liant de type PVDF. Une électrode est préparée à partir de ce composite par méthode manuelle. Cette électrode est utilisée comme électrode de travail dans un dispositif électrochimique du type trois électrodes. Le lithium métallique est utilisé à la fois comme contre électrode et comme référence. L'électrolyte polymère est préparé par mélange du polymère ERM-1 ELEXCEL (4 branches) de DKS lot 8K1201 avec 1,5 Mole de LiBF₄ dans EC/GBL (1 :3) de Tomiyama, et par ajout du Thermoinitiateur Perkadox 16 d'Akzo Nobel dans les proportions: 0,101 grammes de Perkadox 16 (1000ppm), 100 grammes de la solution ERM1/(EC:GBL+ LiBF₄), plus 0.506 grammes de TiO₂ nano (XP-416 de la compagne Kronos). Sachant que le rapport massique ERM1/(EC:GBL+ LiBF₄) est de (90 :10).

La Figure 4 montre le dispositif expérimental utilisé pour la polymérisation in-situ par infrarouge, à une température de 80°Celcius et après 1 heure, le gel est complètement formé, il est de couleur blanchâtre. Les trois électrodes sont branchées à un cycleur de type MacPile®. Le test de stabilité électrochimique est réalisé comme dans l'exemple 1. La Figure 5 montre le mur d'oxydation du polymère gel: le voltage du mur de stabilité mesuré à 100 µA est de 4,8 Volts.

### Exemple 4 - test de stabilité en oxydation du polymère gel ELEXCEL

### MP210-1/TiO₂ (XP-413) : Électrolyte

Le même composite que dans l'exemple 2 de carbone de Shawinigan est mélangé avec un liant de type PVDF. Une électrode est préparée à partir de ce composite par couchage de la patte sur un support en aluminium. Cette électrode est utilisée comme électrode de travail dans un système électrochimique de type à 3 électrodes. Le lithium métallique est utilisé à la fois comme contre électrode et comme électrode de référence. L'électrolyte polymère est préparé par mélange ERM-1 ELEXCEL (4 branches) de DKS lot 8K1201 avec 1,5 Moles LiBF₄ dans EC/GBL (1 :3) de Tomiyama, et par ajout du Thermoinitiateur Perkadox 16 d'Akzo Nobel, dans les proportions de 0,050 grammes de Perkadox 16 (500ppm), de 100 grammes de la solution ERM1/(EC:GBL+ LiBF₄), de 0.105 grammes de TiO₂ nano Rutile avec un traitement de surface inorganique (Al₂O₃ et ZrO₂) et un second traitement de surface organique à base de polyol (XP-413 de la compagne Kronos). Sachant que le rapport massique ERM1/(EC:GBL+ LiBF₄) est de (90 :10). La Figure 4 montre le dispositif utilisé pour le test de polymérisation in-situ par infrarouge à une température de 80° Celcius et après 1 heure, le gel est complètement formé et il est de couleur blanchâtre. Les trois électrodes sont branchées à un cycleur de type MacPile®. Le test de stabilité électrochimique est réalisé comme dans l'exemple 1. La Figure 5 montre le mur d'oxydation du polymère gel. Le voltage du mur de stabilité mesuré pour un courant de 100 µA est de 4,57 Volts.

### Exemple 5 - test de stabilité en oxydation du polymère gel ELEXCEL

### MP210-1/TiO₂ (XP-415) : Électrolyte

Un composite de carbone de Shawinigan (le même que dans l'exemple 2) est mélangé avec un liant de type PVDF. Cette électrode est utilisée comme électrode de travail. Le lithium métallique est utilisé à la fois comme contre électrode et comme électrode de référence. L'électrolyte polymère est préparée par mélange du polymère ERM-1 ELEXCEL (4 branches) de DKS lot 8K1201 avec 1,5 Moles de LiBF₄ dans EC/GBL (1 :3) de Tomiyama, et par ajout du Thermoinitiateur Perkadox 16 d'Akzo Nobel dans les proportions de 0,050 gramme de Perkadox 16 (500ppm), de 100 grammes de la solution ERM1/(EC:GBL+ LiBF₄), plus 0.105 grammes de TiO₂ nano Rutile avec un traitement de surface inorganique (Al₂O₃, SiO₂ et ZrO₂) et un second traitement de surface organique à base de polyol.

(XP-415 de la compagne Kronos). Sachant que le rapport massique ERM1/(EC:GBL+ LiBF₄) est de (90 :10). La Figure 4 montre le dispositif utilisé pour réaliser la polymérisation in-situ par infrarouge. À une température de 80° Celcius et après 1 heure, le gel est complètement formé et il est de couleur blanchâtre. Les trois électrodes sont branchées au cycleur de type MacPile®. Le test de stabilité électrochimique est réalisé comme dans l'exemple 1. La Figure 5 montre le mur d'oxydation du polymère gel. Le voltage du mur de stabilité mesuré à une valeur de courant de 100µA est de 4,65 Volts.

### Exemple 6 - test de stabilité en oxydation du polymère gel ELEXCEL

### MP210-1/TiO₂ (XP-414) : Électrolyte

Le même composite que dans l'exemple 2 de carbone de Shawinigan est mélangé avec un liant de type PVDF. Cette électrode est utilisée comme électrode de travail dans un système de type à 3 électrodes. Le lithium métallique est utilisé à la fois comme contre électrode et comme électrode de référence. L'électrolyte polymère est préparé par mélange du polymère ERM-1 ELEXCEL (4 branches) de DKS lot 8K1201 avec 1,5 Mole de LiBF₄ dans EC/GBL (1:3) de Tomiyama, et par ajout du Thermoinitiateur Perkadox 16 d'Akzo Nobel, dans les proportions de 0,050 gramme de Perkadox 16 (500ppm), de 100 grammes de la solution ERM1/(EC:GBL+ LiBF₄), plus 0,108 grammes de TiO₂ nano Rutile avec un traitement de surface inorganique (Al₂O₃) et un second traitement de surface organique à base de polyol (XP-414 de la compagne Kronos). Sachant que le rapport massique ERM1/(EC:GBL+ LiBF₄) est de (90 :10). La Figure 4 montre le dispositif utilisé pour réaliser les tests de polymérisation in-situ par infrarouge. À 80° Celsius et après 1 heure, le gel est complètement formé et il est de couleur blanchâtre. Les trois électrodes sont branchées à un cycleur de type MacPile®. Le test de stabilité électrochimique est réalisé comme dans l'exemple 1. La Figure 5 montre le mur d'oxydation du polymère gel. Le voltage du mur de stabilité, mesuré à 100µA, est de 4,608 Volts.

### Exemple 7 : test de stabilité en oxydation du polymère gel ELEXCEL

### MP210-1/SiO₂ : Electrolyte

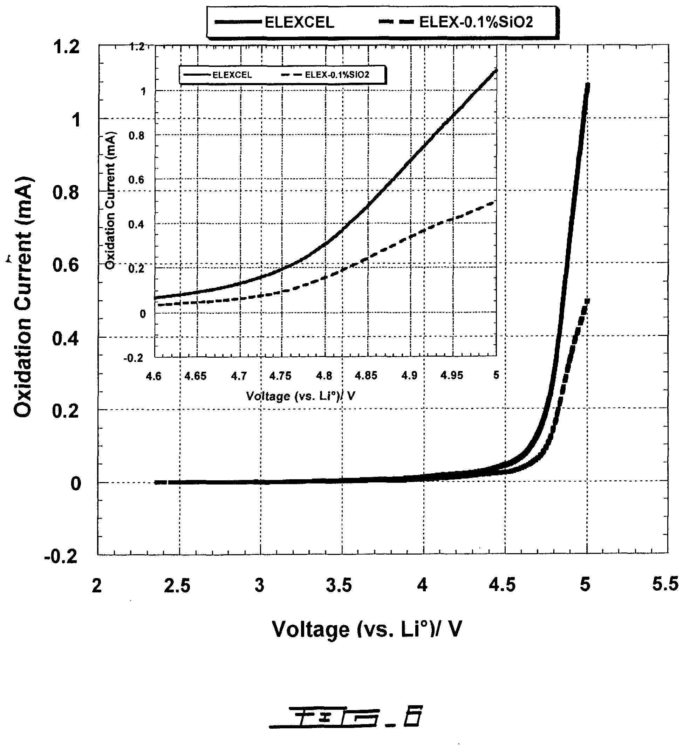

Le même composite que dans l'exemle 2 de carbone de Shawinigan est mélangé avec un liant de type PVDF. Cette électrode est utilisée comme électrode de travail dans un système électrochimique de type 3 électrodes. Le lithium métallique est utilisé à la fois comme contre électrode et comme électrode de référence. L'électrolyte polymère est préparé par mélange de ERM-1 ELEXCEL (4 branches) de DKS lot 8K1201 avec 1.5 Mole de LiBF₄ dans EC/GBL (1 :3) de Tomiyama, et par ajout du Thermoinitiateur Perkadox 16 d'Akzo Nobel, dans les proportions de 0,050 grammes de Perkadox 16 (500ppm), de 100 grammes de la solution ERM1/(EC:GBL+ LiBF₄), plus de 0,103 grammes de nano SiO₂ (Aerosil de Degussa, Amorphous Fumed Silica). Sachant que le rapport massique ERM1/(EC:GBL+ LiBF₄) est de (90:10). La Figure 4 montre le dispositif utilisé pour les tests de polymérisation in-situ par infrarouge. À une température de 80° Celcius et après 1 heure, le gel est complètement formé est il est de couleur blanchâtre. Les trois électrodes sont branchées à un cycleur de type MacPile®. Le test de stabilité électrochimique est réalisé comme dans l'exemple 4. La Figure 6 montre le mur d'oxydation du polymère gel. Le voltage du mur de stabilité, mesuré à une valeur de courant de 100µA, est de 4,757 Volts.

### Exemple 8 - test de stabilité en oxydation du polymère gel ELEXCEL

### MP210-1/PVDF : Électrolyte

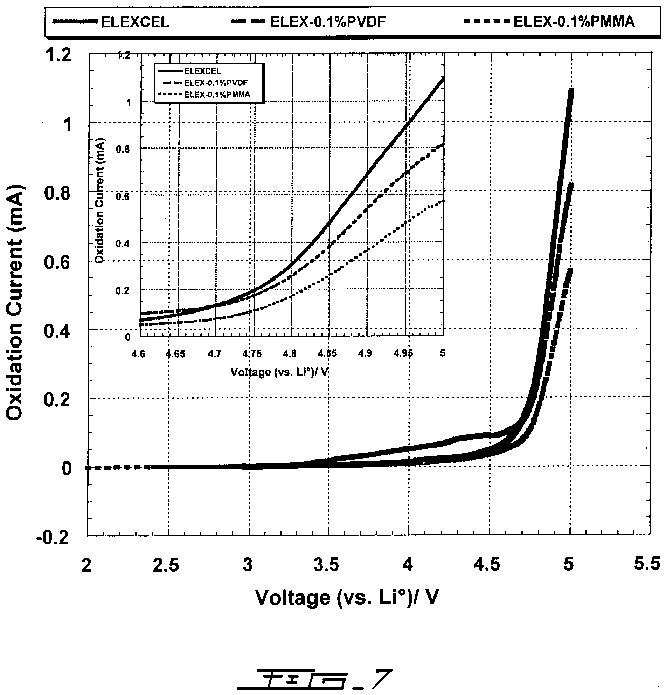

Le même composite que dans l'exemple 8 de carbone de Shawinigan est mélangé avec un liant de type PVDF. Cette électrode est utilisée comme électrode de travail dans un système à 3 électrodes. Le lithium métallique est utilisé à la fois comme contre électrode et comme électrode de référence. L'électrolyte polymère est préparé par mélange de ERM-1 ELEXCEL (4 branches) de DKS lot 8K1201 avec 1,5 Mole de LiBF₄ dans EC/GBL (1 :3) de Tomiyama, et par ajout du thermoinitiateur Perkadox 16 d'Akzo Nobel, dans les proportions de 0,050 grammes de Perkadox 16 (500 ppm), 100 grammes de la solution ERM1/(EC:GBL+ LiBF₄), plus 0,11 grammes de PVDF (Kruha, Japon). Sachant que le rapport massique ERM1/(EC:GBL+ LiBF₄) est de (90 :10). Le Figure 4 montre le dispositif utilisé pour réaliser les tests de polymérisation in-situ par infrarouge. À une température de 80° C et après 1 heure, le gel est complètement formé, il est de couleur blanchâtre. Les trois électrodes sont branchées à un cycleur de type MacPile®. Le test de stabilité électrochimique est réalisé comme dans l'exemple 1. La Figure 7 montre le mur d'oxydation du polymère gel. Le voltage du mur de stabilité, mesuré à 100µA, est de 4,607 Volts.

### Exemple 9 - test de stabilité en oxydation du polymère gel ELEXCEL

### MP210-1/PMMA : Électrolyte

Le même composite que dans l'exemple 2 de carbone de Shawinigan est mélangé avec un liant de type PVDF. Cette électrode est utilisée comme électrode de travail dans un système électrochimique de type à 3 électrodes. Le lithium métallique est utilisé à la fois comme contre électrode et comme électrode de référence. L'électrolyte polymère est préparé par mélange du polymère ERM-1 ELEXCEL (4 branches) de DKS lot 8K1201 avec 1,5 Mole de LiBF₄ dans EC/GBL (1 :3) de Tomiyama, et par ajouter du Thermoinitiateur Perkadox 16 d'Akzo Nobel, dans les proportions de 0,050 grammes de Perkadox 16 (500ppm), de 100 grammes de la solution ERM1/(EC:GBL+ LiBF₄), plus 0,11 grammes de PMMA (Aldrich). Sachant que le rapport massique ERM1/(EC:GBL+ LiBF₄) est de (90:10). Le schéma 1 montre le montage de la polymérisation in-situ par infrarouge. À 80°C et après 1heure, le gel est complètement formé et de couleur blanchâtre. Les trois électrodes sont branchées à un cycleur MacPile®. Le test de stabilité électrochimique est réalisé comme dans l'exemple 1. La Figure 7 montre le mur d'oxydation du polymère gel. Le voltage du mur de stabilité mesuré à 100µAmpère est de 4,742 Volts.

### Exemple 10 - préparation d'un super-condensateur hybride

L'anode est fabriquée à partir de particules de graphite sphérique d'une taille (après enrobage) de 20 *µ*m, enrobées avec 1 % de graphite prismatique, le mélange est assuré par Mécano-fusion ou par Hybridiser, 90 % de graphite est mélangé à 5 % de STYRENE BUTADIENE RUBBER (STYRENE BUTADIENE RUBBER (SBR) Zeon) plus 5% d'un épaississant de type WSC (DKS, Japon) dissous dans l'eau. Une concentration optimum est choisie pour l'épandage sur le cuivre par Doctor Blade.

La cathode est fabriquée à partir d'un carbone à grande surface spécifique (2000 m²/g) de type PICACTIF SuperCap BP10, de la compagne PICA France). 20 % de ce carbone est mélangé à 60 % de STYRENE BUTADIENE RUBBER (STYRENE BUTADIENE RUBBER (SBR) Zeon) plus 20% d'épaississant de type WSC (DKS, Japon) dissous dans l'eau. Une concentration optimum est choisie pour l'épandage sur l'aluminium par Doctor Blade.

L'électrolyte polymère est formé d'un mélange solvant/polymère avec un rapport massique de 90/10 comme décrit dans l'exemple 2.

Le générateur électrochimique (super condensateur hybride) est fabriqué selon le principe Anode/Électrolyte polymère/Cathode.

L'évaluation des performances électrochimiques du super condensateur ainsi obtenu est réalisée entre 2,5 et 4,5 Volts. Le potentiel moyen est de 3,6 Volts et sa capacitance moyenne est de 0,25mAh.

### Exemple 11 - préparation d'un super-condensateur hybride

L'anode est formée à partir de nano particules de Li₄Ti₅O₁₂ enrobées avec 6 % de noir de carbone Ketjen, le mélange est assuré par Mécano-fusion ou par Hybridiser, 90 % de Li₄Ti₅O₁₂-carbon est mélangé à 5 % de STYRENE BUTADIENE RUBBER (STYRENE BUTADIENE RUBBER (SBR) Zeon) additionné de 5% d'épaississant de type WSC (DKS, Japon) dissous dans l'eau. Une concentration optimum est choisie pour l'épandage sur aluminium par la technique du Docteur Blade.

La cathode est fabriquée à partir de particules de carbone à grande surface (2000 m²/g), de type PICACTIF SuperCap BP10, de la compagnie PICA France). 20 % de ce carbone est mélangé à 60 % de STYRENE BUTADIENE RUBBER (STYRENE BUTADIENE RUBBER (SBR) Zeon) additionné de 20% d'épaississant de type WSC (DKS, Japon) dissous dans l'eau. Une concentration optimum est choisie pour l'épandage sur l'aluminium par Docteur Blade.

L'électrolyte est formé du mélange solvant/polymère 90/10 massique tel que décrit dans l'exemple 2. Le générateur électrochimique (super condensateur hybride) est fabriqué suivant le principe Anode/électrolyte polymère/cathode.

L'évaluation des propriétés électrochimiques est réalisée à des limites de voltage comprise entre 1,5 et 2,5 Volts. Le potentiel moyen de la décharge du supercondensateur hybride est de 2,25 Volts, obtenu sous un régime de 10 Coulombs (6min) est de 90% de la capacité et il est montre, de plus, une très bonne cyclabilité.

### Exemple 12 -Préparation d'une batterie Li-ion

L'anode est fabriquée à partir de nano particules de Li₄Ti₅O₁₂ enrobées avec 6 % de noir de carbone Ketjen, le mélange est assuré par Mécano-fusion ou par Hybridiser, 90 % de Li₄Ti₅O₁₂-carbon est mélangé à 5 % de STYRENE BUTADIENE RUBBER (STYRENE BUTADIENE RUBBER (SBR) Zeon) plus 5% d'épaississant de type WSC (DKS, Japon) dissous dans l'eau. Une concentration optimum est choisie pour l'épandage sur aluminium par doctor balde.

La fabrication de la cathode est formée de LiCoPO₄, enrobé avec 6 % de noir de carbone Ketjen, le mélange est assuré par Mécano-fusion ou par Hybridiser, 90 % de Li₄Ti₅O₁₂-carbon est mélangé à 5 % de STYRENE BUTADIENE RUBBER (STYRENE BUTADIENE RUBBER (SBR) Zeon) plus 5% d'épaississant de type WSC (DKS, Japon) dissous dans l'eau. Une concentration optimum est choisie pour l'épandage sur aluminium par doctor balde.

L'électrolyte est formé d'un mélange solvant/polymère 90/10 massique tel que décrit dans l'exemple 2. La batterie Li-ion est fabriquée comme suivant le principe Anode/Électrolyte polymère/Cathode. Puis, l'évaluation des performances électrochimiques est réalisée entre 1,5 et 3,3 Volts. Le potentiel moyen est de 3,25 Volts et sa capacité moyenne est de 120 mAh/g.

### Exemple 13 - stabilité de l'interface Li-métal avec un polymère gel

La stabilité mécanique du lithium métal dans le polymère gel a été démontrée, en utilisant une cellule électrochimique; Lithium métal//Électrolyte gel// LiFePO4, le gel polymère est le même que celui utilisé dans l'exemple #1. Le cyclage est réalisé à un régime en C/1 en charge décharge. Aucune dendrite ne s'est formée et l'interface du lithium/polymère gel demeure stable après plus que 100 cycles.

En résumé, les électrolytes selon l'invention présentent notamment les propriétés d'être facilement transformables en gel ou en solide, faciles à manipuler, de ne nécessiter aucune précaution particulières de sécurité, d'être stables électrochimiquement même à haut voltage et de présenter une coloration transparente. Dans leur forme solide ces compositions électrolytiques peuvent être utilisées dans la construction notamment de batteries solides telles que celles décrites dans le brevet US-A-6.190.804 et notamment telles que décrites en colonne 2 de ce document en relation avec la Figure 1 du même document.

Les compositions électrochimiques de l'invention présentent notamment les propriétés d'être disponibles dans diverses formes physiques, notamment sous forme d'un gel ou d'un solide, d'être stables électrochimiquement, transparentes, de présenter de bonnes propriétés mécaniques, notamment dans leur forme solide.

Les dispositifs électrochimiques de l'invention présentent quant à eux notamment les avantages d'être très performants, notamment très stables au cyclage, faciles à utiliser et non dangereux.

Pour la première fois des systèmes électrochimiques hautement performants et présentant une stabilité au cyclage supérieure à 4 volts sont mis à disposition.

Bien que la présente invention ait été décrite à l'aide de mises en œuvre spécifiques, il est entendu que plusieurs variations et modifications peuvent se greffer aux dites mises en œuvre, et la présente invention vise à couvrir de telles modifications, usages ou adaptations de la présente invention suivant en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Électrolyte polymère pour un générateur électrochimique présentant une stabilité au cyclage supérieure à 4 Volts, la stabilité au cyclage étant déterminée par cyclovoltamétrie lente mise en œuvre avec une vitesse de balayage de 10 mV/ h, le polymère électrolyte étant à base :
- d'au moins un polymère en étoile de type polyéther à quatre branches, ayant des terminaisons hybrides contenant les fonctions suivantes : acrylate ou méthacrylate et alkoxy, allyloxy et/ou vinyloxy, une branche au moins dudit polymère à quatre branches étant susceptible(s) de donner lieu à une réticulation;
- d'au moins un composant choisi dans les familles suivantes :
- SiO₂, Al₂O₃; et
- nano TiO₂ enrobé ou non d'une matière organique choisie dans le groupe constitué par au moins un polyol et/ou par un copolymère polyéthyle-polyoxyde d'éthylène et/ou d'une matière inorganique choisie parmi SiO₂, Al₂O₃ et leurs mélanges.

2. Électrolyte polymère selon la revendication 1, comportant en outre un sel ou un mélange de sels avec un plastifiant.

3. Électrolyte polymère selon la revendication 1, sous forme sèche, obtenu par addition d'un sel de lithium ou d'un mélange de sels dans la matrice du polymère afin d'assurer la conductivité ionique.

4. Électrolyte polymère selon la revendication 3, dans lequel les sels de lithium sont de type : LiN(SO₂CF₃)₂:LiTFSI, LiN(SO₂C₂F₅)₂:BETI, LiC(SO₂CF₃)₃, LiBF₄, LiPF₆, LiCLO₄, LiSO₃CF₃, LiAsF₆.

5. Électrolyte polymère selon la revendication 2, dans lequel le plastifiant est constitué par au moins un mélange d'un solvant organique choisi dans le groupe constitué par : un carbonate d'éthylène, un carbonate de propylène, une γ-gamma butyrolactone, un carbonate de diméthyle, un carbonate de diéthyle, une tétra éthyl-sulfone amide, et un carbonate de méthyl-éthyl (EMC).

6. Composition électrolytique obtenue à partir d'au moins un électrolyte polymère selon l'une quelconque des revendications 1 à 5, en soumettant les composants dudit électrolyte à des conditions permettant de réaliser la réticulation du polymère, lesdites conditions étant une irradiation UV, une irradiation par faisceau d'électrons (EB) et/ou un traitement thermique.

7. Composition électrolytique selon la revendication 6, dans laquelle la réticulation se fait en présence d'au moins un sel de lithium.

8. Composition électrolytique selon la revendication 6, dans laquelle la réticulation se fait en l'absence de sels de lithium.

9. Composition électrolytique selon l'une quelconque des revendications 6 à 8, obtenue par réticulation réalisée à une température comprise entre 50 et 100°C, de préférence à une température comprise entre 60 et 80°C.

10. Composition électrolytique selon l'une quelconque des revendications 6 à 9, obtenue par réticulation pendant une durée comprise entre 5 minutes et 8 heures, de préférence pendant une durée comprise entre 1 heure et 4 heures.

11. Composition électrolytique selon l'une quelconque des revendications 6 à 10, obtenue par réticulation en présence d'un catalyseur choisi dans le groupe constitué par les peroxides organiques, les hydroperoxides et les peresters.

12. Composition électrolyte selon l'une quelconque des revendications 6 à 11, dans laquelle la réticulation est réalisée par voie thermique in situ dans une batterie ou dans un supercondensateur hybride une fois construit et contenant la dite composition électrolytique.

13. Composition électrolytique selon l'une quelconque des revendications 6 à 12, sous forme d'un polymère gel.

14. Composition électrolytique selon l'une quelconque des revendications 6 à 12 sous forme solide.

15. Dispositif électrochimique comprenant :
- au moins un électrolyte tel que défini dans l'une quelconque des revendications 1 à 5 et ou au moins une composition électrolytique telle que définie dans l'une quelconque des revendications 6 à 14;
- une anode électroactive; et
- une cathode ayant un potentiel de 3,5 à 5 Volts, constituée à partir de LiCoPO₄ et/ou de Li(Mn_{0.66}Ni_{0.34})O₂.

16. Supercondensateur comprenant :
- au moins un électrolyte polymère tel que défini dans l'une quelconque des revendications 1 à 5 et ou au moins une composition électrolytique telle que définie dans l'une quelconque des revendications 6 à 14;
- une anode électroactive; et
- une cathode électroactive.

17. Supercondensateur selon la revendication 16, dans lequel le carbone est sous forme de particules ayant une surface spécifique supérieure ou égale à 2 m²/g et inférieure ou égale à 2.500 m²/g.

18. Supercondensateur selon la revendication 16 ou 17, dans lequel la cathode électroactive comprend un polymère conducteur.

19. Supercondensateur selon l'une quelconque des revendications 16 à 18, dans lequel l'anode électroactive est une anode GIC (Graphite Intercalation Compound).

20. Supercondensateur selon l'une quelconque des revendications 16 à 19, dans lequel l'anode électroactive est constituée d'une couche de carbone à basse cristallinité et/ou d'un carbone dur.

21. Dispositif électrochimique selon la revendication 15 ou supercondensateur selon l'une quelconque des revendications 16 à 20, dans lequel l'anode électroactive comprend un alliage de lithium.

22. Dispositif électrochimique selon la revendication 15 ou supercondensateur selon l'une quelconque des revendications 16 à 21, dans lequel la cathode électroactive a un potentiel de 4 Volts.

23. Dispositif électrochimique selon la revendication 15 ou supercondensateur selon l'une quelconque des revendications 16 à 20, dans lequel l'anode électroactive est une anode GIC (Graphite Intercalation Compound), constituée de graphite naturel et/ou artificiel, et/ou de carbone à haute cristallinité.

24. Dispositif électrochimique selon la revendication 15 ou supercondensateur selon l'une quelconque des revendications 16 à 20, dans lequel l'anode électroactive est constituée par un carbone à basse cristallinité.

25. Dispositif électrochimique selon la revendication 15, dans lequel l'anode électroactive comprend du lithium métallique.

## Patentansprüche

1. Polymerer Elektrolyt für einen elektrochemischen Generator mit einer Zyklenfestigkeit größer 4 V, wobei die Zyklenfestigkeit durch langsame Zyklovoltammetrie mit einer Abtastgeschwindigkeit von 10 mV/h gemessen wird, wobei der polymere Elektrolyt auf folgenden Elementen basiert:
- mindestens einem Sternpolymer vom Typ eines vierzweigigen Polyethers mit hybriden Enden, die folgende Anteile enthalten: Acrylat oder Methacrylat und Alkoxy, Allyloxy und/oder Vinyloxy, wobei mindestens ein Zweig des vierzweigigen Polymers zur Vernetzung in der Lage ist,
- mindestens einem Bestandteil, der aus folgenden Familien gewählt ist:
- SiO₂, Al₂O₃ und
- Nano-TiO2 mit oder ohne Beschichtung aus einem organischen Stoff, der aus folgender Gruppe gewählt ist: mindestens ein Polyol und/oder ein Polyethyl-Ethylenpolyoxid-Copolymer, und/oder ein anorganischer Stoff, der aus SiO₂, Al₂O₃ und Mischungen davon gewählt ist.

2. Polymerer Elektrolyt nach Anspruch 1, ferner umfassend ein Salz oder ein Salzgemisch mit einem Weichmacher.

3. Polymerer Elektrolyt nach Anspruch 1 in trockener Form, der erzeugt wird durch Hinzufügen eines Lithiumsalzes oder eines Salzgemisches zur Polymermatrix, um die lonenleitfähigkeit zu gewährleisten.

4. Polymerer Elektrolyt nach Anspruch 3, wobei die Lithiumsalze von folgendem Typ sind: LiN(SO₂CF₃)₂:LiTFSi, LiN(SO₂C₂F₅)₂:BETI, LiC(SO₂CF₃)₃, LiBF₄, LiPF₆, LiCLO₄, LiSO₃CF₃, LiAsF₆.

5. Polymerer Elektrolyt nach Anspruch 2, wobei der Weichmacher aus mindestens einer Mischung aus einem aus folgender Gruppe gewählten organischen Lösemittel besteht: ein Ethylencarbonat, ein Propylencarbonat, ein Gamma-Butyrolacton, ein Dimethylcarbonat, ein Diethylcarbonat, ein Tetraethylsulfonamid und ein Methyl-Ethyl-Carbonat (EMC).

6. Elektrolytenzusammensetzung, die aus mindestens einem polymeren Elektrolyt nach einem der Ansprüche 1 - 5 erzeugt wird, indem die Bestandteile des Elektrolyten Bedingungen unterstellt werden, die die Vernetzung des Polymers ermöglichen, wobei es sich bei den Bedingungen um eine UV-Bestrahlung, eine Bestrahlung mit einem Elektronenstrahl (EB) und/oder einer Wärmebehandlung handelt.

7. Elektrolytenzusammensetzung nach Anspruch 6, wobei die Vernetzung in Gegenwart mindestens eines Lithiumsalzes erfolgt.

8. Elektrolytenzusammensetzung nach Anspruch 6, wobei die Vernetzung in Abwesenheit von Lithiumsalzen erfolgt.

9. Elektrolytenzusammensetzung nach einem der Ansprüche 6 - 8, die erzeugt wird durch Vernetzung bei einer Temperatur zwischen 50 und 100 °C, vorzugsweise zwischen 60 und 80 °C.

10. Elektrolytenzusammensetzung nach einem der Ansprüche 6 - 9, erzeugt durch Vernetzung für eine Dauer zwischen 5 min und 8 h, vorzugsweise zwischen 1 und 4 h.

11. Elektrolytenzusammensetzung nach einem der Ansprüche 6 - 10, erzeugt durch Vernetzung in Gegenwart eines Katalysators, der aus folgender Gruppe gewählt ist: organische Peroxide, Hydroperoxide und Perester.

12. Elektrolytenzusammensetzung nach einem der Ansprüche 6 - 11, wobei die Vernetzung in situ auf thermische Weise in einer Batterie oder einem hybriden Superkondensator vorgenommen wird, sobald dieser aufgebaut wird und die Elektrolytenzusammensetzung enthält.

13. Elektrolytenzusammensetzung nach einem der Ansprüche 6 - 12 in Form eines polymeren Gels.

14. Elektrolytenzusammensetzung nach einem der Ansprüche 6 - 12 in fester Form.

15. Elektrochemische Vorrichtung, umfassend:
- mindestens einen Elektrolyten nach einem der Ansprüche 1 - 5 und/oder mindestens eine Elektrolytenzusammensetzung nach einem der Ansprüche 6 - 14,
- eine elektroaktive Anode und
- eine Kathode mit einem Potenzial von 3,5 - 5 V, die aus LiCoPO₄ und/oder Li(Mn_{0,66}Ni_{0,34})O₂ ausgebildet ist.

16. Superkondensator, umfassend:
- mindestens einen polymeren Elektrolyten nach einem der Ansprüche 1 - 5 und/oder mindestens eine Elektrolytenzusammensetzung nach einem der Ansprüche 6 - 14,
- eine elektroaktive Anode und
- eine elektroaktive Kathode.

17. Superkondensator nach Anspruch 16, wobei der Kohlenstoff in Form von Partikels mit einer spezifischen Fläche größer oder gleich 2 m²/g und kleiner oder gleich 2500 m²/g vorliegt.

18. Superkondensator nach Anspruch 16 oder 17, wobei die elektroaktive Kathode ein leitfähiges Polymer umfasst.

19. Superkondensator nach einem der Ansprüche 16 - 18, wobei die elektroaktive Anode eine GIC-Anode (Graphite Intercalation Compound) ist.

20. Superkondensator nach einem der Ansprüche 16 - 19, wobei die elektroaktive Anode aus einer Kohlenstoffschicht mit geringer Kristallinität und/oder einem harten Kohlenstoff besteht.

21. Elektrochemische Vorrichtung nach Anspruch 15 oder Superkondensator nach einem der Ansprüche 16 - 20, wobei die elektroaktive Anode eine Lithiumlegierung umfasst.

22. Elektrochemische Vorrichtung nach Anspruch 15 oder Superkondensator nach einem der Ansprüche 16 - 21, wobei die elektroaktive Kathode ein Potenzial von 4 V aufweist.

23. Elektrochemische Vorrichtung nach Anspruch 15 oder Superkondensator nach einem der Ansprüche 16 - 20, wobei die elektroaktive Anode eine GIC-Anode (Graphite Intercalation Compound) ist, die aus natürlichem und/oder künstlichem Graphit und/oder Kohlenstoff mit hoher Kristallinität besteht.

24. Elektrochemische Vorrichtung nach Anspruch 15 oder Superkondensator nach einem der Ansprüche 16 - 20, wobei die elektroaktive Anode aus einem Kohlenstoff mit geringer Kristallinität besteht.

25. Elektrochemische Vorrichtung nach Anspruch 15, wobei die elektroaktive Anode metallisches Lithium umfasst.

## Claims

1. Polymeric electrolyte for electrochemical generator having cycle stability higher than 4 Volts, cycle stability being determined by slow cyclic voltammetry applied at a scan rate of 10 mV/h, the polymeric electrolyte comprising:
- at least one star-polymer of four-arm polyether type, having hybrid terminal ends containing the following functions. acrylate or methacrylate and alkoxy, allyloxy and/or vinyloxy, at least one arm of said four-arm polymer being able to give rise to crosslinking;
- and at least one component selected from the following families:
∘ SiO₂, Al₂O₃; and
∘ nano TiO₂ coated or non-coated with an organic material selected from the group formed by at least one polyol and/or by an ethylene polyethyl-polyoxide copolymer and/or an inorganic material selected from among SiO₂, Al₂O₃ and mixtures thereof.

2. The polymeric electrolyte according to claim 1, also comprising a salt or mixture of salts with a plasticizer.

3. The polymeric electrolyte according to claim 1, in dry form, obtained by adding a lithium salt or mixture of salts to the matrix of the polymer to ensure ionic conductivity.

4. The polymeric electrolyte according to claim 3, wherein the lithium salts are of the type: LiN(SO₂CF₃)₂:LiTFSI, LiN(SO₂C₂F₅)₂:BETI, LiC(SO₂CF₃)₃, LiBF₄, LiPF₆, LiCLO₄, LiSO₃CF₃, LiAsF₆.

5. The polymeric electrolyte according to claim 2, wherein the plasticizer is composed of at least one mixture of an organic solvent selected from the group formed by: ethylene carbonate, propylene carbonate, γ-gamma butyrolactone, dimethyl carbonate, diethyl carbonate, tetra ethyl-sulfone amide and ethyl-methyl carbonate (EMC).

6. Electrolytic composition obtained from at least one polymeric electrolyte according to any of claims 1 to 5, by subjecting the components of said electrolyte to conditions allowing crosslinking of the polymer, said conditions being UV irradiation, electron beam irradiation (EB) and/or heat treatment.

7. The electrolytic composition according to claim 6, wherein crosslinking is performed in the presence of at least one lithium salt.

8. The electrolytic composition according to claim 6, wherein crosslinking is performed in the absence of lithium salts.

9. The electrolytic composition according to any of claims 6 to 8, obtained by crosslinking performed at a temperature of between 50 and 100° C, preferably at a temperature of between 60 and 80° C.

10. The electrolytic composition according to any of claims 6 to 9, obtained by crosslinking for a time of between 5 minutes and 8 hours, preferably for a time of between 1 hour and 4 hours.

11. The electrolytic composition according to any of claims 6 to 10, obtained by crosslinking in the presence of a catalyst selected from the group formed by organic peroxides, hydroperoxides and peresters.

12. The electrolytic composition according to any of claims 6 to 11, wherein crosslinking is performed via *in situ* thermal route in a battery or in a hybrid supercapacitor once fabricated and containing said electrolytic composition.

13. The electrolytic composition according to any of claims 6 to 12, in the form of a polymer gel.

14. The electrolytic composition according to any of claims 6 to 12 in solid form.

15. Electrochemical device comprising:
- at least one electrolyte such as defined in any of claims 1 to 5 and/or at least one electrolytic composition such as defined in any of claims 6 to 14;
- an electroactive anode; and
- a cathode having a potential of 3.5 to 5 Volts, fabricated from LiCoPO₄ and/or Li(Mn_{0.66}Ni_{0.34})O₂.

16. Supercapacitor comprising:
- at least one polymeric electrolyte such as defined in any of claims 1 to 5 and/or at least one electrolytic composition such as defined in any of claims 6 to 14;
- an electroactive anode; and
- an electroactive cathode.

17. The supercapacitor according to claim 16, wherein the carbon is in the form of particles have a specific surface area equal to or greater than 2 m²/g and equal to or lower than 2,500m²/g.

18. The supercapacitor according to claim 16 or 17, wherein the electroactive cathode comprises a conductive polymer.

19. The supercapacitor according to any of claims 16 to 18, wherein the electroactive anode is a GIC anode (Graphite Intercalation Compound).

20. The supercapacitor according to any of claims 16 to 19, wherein the electroactive anode is composed of a layer of carbon having low crystallinity and/or of a hard carbon.

21. The electrochemical device according to claim 15 or supercapacitor according to any of claims 16 to 20, wherein the electroactive anode comprises a lithium alloy.

22. The electrochemical device according to claim 15 or supercapacitor according to any of claims 16 to 21, wherein the electroactive cathode has a potential of 4 Volts.

23. The electrochemical device according to claim 15 or supercapacitor according to any of claims 16 to 20, wherein the electroactive anode is a GIC anode (Graphite Intercalation Compound), composed of natural and/or artificial graphite, and/or of highly crystalline carbon.

24. The electrochemical device according to claim 15 or supercapacitor according to any of claims 16 to 20, wherein the electroactive anode is composed of carbon having low crystallinity.

25. The electrochemical device according to claim 15, wherein the electroactive anode comprises lithium metal.
